# EUROPÄISCHE PATENTSCHRIFT

(11) **EP 1 072 146 B1**
(45) Veröffentlichungstag und Bekanntmachung des Hinweises auf die Patenterteilung: **16.07.2008**
(21) Anmeldenummer: 99913196.4
(22) Anmeldetag: 27.02.1999
(51) Int. Cl.: H04M 11/06, H04N 1/00

(54) **VERFAHREN ZUR NUTZUNG DIGITALER DATENNETZE BEI DER ÜBERTRAGUNG VON DATEN ÜBER SPRACHVERBINDUNGSWEGE**
METHOD FOR UTILIZING DIGITAL DATA NETWORKS FOR THE TRANSMISSION OF DATA VIA VOICE CONNECTION PATHS
PROCEDE D'UTILISATION DE RESEAUX INFORMATIQUES LORS DE LA TRANSMISSION DE DONNEES PAR L'INTERMEDIAIRE DE VOIES DE COMMUNICATION VOCALES

(30) Priorität: 17.04.1998 DE 19817007
(43) Veröffentlichungstag der Anmeldung: 31.01.2001
(73) Patentinhaber: Deutsche Telekom AG, 53113 Bonn (DE)
(72) Erfinder: DASSOW, Heiko, D-64347 Griesheim (DE); ZEFFLER, Klaus-Peter, D-64297 Darmstadt (DE)
(86) Internationale Anmeldenummer: PCT/EP1999/001284
(87) Internationale Veröffentlichungsnummer: WO 1999/055069

(56) Entgegenhaltungen:
- WO-A-97/47107
- WO-A-98/13996

## Beschreibung

Die Erfindung betrifft eine Verfahren zur Nutzung digitaler Datennetze nach dem Oberbegriff des Anspruchs 1.

Zum Zwecke der Datenübertragung existieren Kommunikationsnetze, die ausschließlich zur Übertragung digital codierter Daten (Daten, Sprache, Tonsignale, Bilder) zwischen Endgeräten dienen und für diesen Einsatzzweck entsprechend optimiert sind.

Aufgrund der beschränkten weltweiten Verfügbarkeit dieser Netze werden auch heute noch eine Vielzahl von Daten über analoge Sprachverbindungswege übertragen. Hierbei übernehmen Modulatoren und Demodulatoren (MODEMs) die Anpassung der binär codierten Daten an die analogen Übertragungseigenschaften der Sprachverbindungswege.

Durch die fortschreitende Verbreitung von Datennetzen, insbesondere des mit INTERNET bezeichneten Datennetzes zur weltweiten Zusammenschaltung von Computernetzen, haben sich auch Verfahren etabliert, die Sprache in codierter Form über Datennetze übertragen. Durch die inzwischen weit fortgeschrittene Digitalisierung der analogen Telekommunikationsnetzwerke (Fernmeldenetze) gibt es kaum noch reine, d. h. durchgehende, analoge Sprachverbindungswege. In der Regel wird heute nur noch die Anschlußleitung des Teilnehmers analog betrieben, während die Weitverkehrsübertragung der Sprachinformation mit Hilfe von digditalen Übertragungsverfahren durchgeführt wird. Für einen nach CCITT (Commité Consultative International Télégraphique et Telephonque - Internationaler beratender Ausschuß für den Telegraphen- und Fernsprechdienst) genormten analogen Sprachübertragungsweg des Fernmeldenetzes wird üblicherweise eine Übertragungsrate von 64kbit/s verwendet. Die bekanntesten Systeme zur leitungsgebundenen Sprachübertragung sind PDH (Plesiosynchrone Digitale Hierarchie - Standardisiertes System für die digitale Datenübertragung), SDH (Synchrone Digitale Hierarchie - Internationaler Standard für synchrone Übertragungsnetze) und ATM (Asynchronous Transfer Mode - Digitales Übertragungsverfahren, z.B. für Breitband ISDN, bei dem die Gesamtkapazität eines Übertragungskanals je nach Bedarf und Zeit auf wenige oder viele Verbindungen aufgeteilt wird, die den Kanal dann gemeinsam nutzen). Für die drahtlose Übertragung von Sprache in Mobilfunknetzen dient der DECT-Standard (Digital Enhanced (European) Cordless Telecommunication - Einheitlicher digitaler Standard für schnurlose Telfone, drahtelose TK-Anlagen und drahtlose LAN in Europa) sowie der GSM-Standard (Global Systems for Mobile Communication - Weltweiter Mobilfunkstandard für digitale, zellulare Mobilfunknetze). Neurdings ebenso in der Diskussion ist die Sprachübertragung über das Internet, wie ein Hinweis in der Zeitschrift iX von 8/97, Seite 32 zeigt.

Auch wenn mittels dieser technischen Verfahren der Sprachverbindungsweg aufgebaut wird, muß für eine in diesem Sprachverbindungsweg erfolgende schmalbandige (niederbitratige) Datenübertragung die volle Bandbreite des Sprachkanals von beispielsweise 64kbits/s übertragen werden. Dieses ist erforderlich, damit das empfangende Datenendgerät die ursprünglichen Daten wieder aus dem Sprachkanal decodieren kann. Auf diese Weise wird die theoretisch mögliche Nutzdatenrate einer digitalen Übertragungsstrecke, über welche die niederbitratigen Daten übertragen werden müssen, nicht voll ausgenutzt. Dieses ist jedoch immer dann sehr nachteilig, wenn die so genutzte Übertragungskapazität besonders teuer ist, wie dieses beispielsweise bei Satellitenverbindungen oder Überseekabeln der Fall ist.

Durch die bereits vorhandenen multifunktionalen digitalen Netze ist es ebenfalls möglich, Daten und Sprache mittels der gleichen Systemressourcen zu übertragen. In diesem Fall ist es für die Datenübertragung zwischen zwei Endsystemen nicht mehr erforderlich, einen Sprachverbindungsweg zu benutzen. Deshalb kann die volle Bandbreite der digitalen Datenverbindung für die Übertragung der Nutzinformation verwendet werden. Jedoch ist dieses Verfahren darauf angewiesen, daß beide Endgeräte direkt an das multifunktionale Netz angeschlossen sind und daß beide Endgeräte technisch für diese Art der Datenübertragung vorbereitet sind.

Beispielhaft für eine Vielzahl von Anwendungen zur Datenübertragung im Sprachverbindungsweg ist die Faksimile-Übertragung (FAX) der Gruppe 3. Hierbei wird der Sprachverbindungsweg einer gewählten Fernmeldeverbindung zur Übertragung von Bildinformation verwendet. Zwar existiert auch eine FAX Gruppe 4 Variante, welche die Bildinformation über das multifunktionale ISDN-Netz übertragen kann, ohne daß dabei analoge Sprachverbindungswege verwendet werden, jedoch ist diese Variante derzeit noch recht wenig verbreitet, weswegen die meisten Gruppe 4 FAX-Geräte abwärtskompatibel mit der Gruppe 3 sind.

Ebenfalls ist ein Verfahren bekannt, bei dem die FAX-Nutzinformation an dem Kommunikationsendpunkt nicht direkt als Bild gedruckt wird, sondern in digitaler Form in einer elektronischen Datenverarbeitungsanlage (EDV) zwischengespeichert wird, wie eine Notiz in der Zeitschrift iX von 8/97, Seite 35 zeigt. Die digitale Datenverarbeitungsanlage dient dabei der manuellen oder automatischen Vermittlung der FAX-Nutzinformation an einen dedizierten Arbeitsplatz oder der Archivierung und Protokollierung der versendeten und empfangenen Information.

Die Einzelheiten dieses als "FAX über eMail" zu bezeichnenden Verfahrens sind in einer Studie "WIDE Messagebased Fax over the Internet" von Kiyoshi Toyoda et al. vom WIDE-Projekt in Application Area, INTERNET-DRAFT, Juli 1997, Seiten 1 bis 5 näher beschrieben.

Des weiteren ist in diesem Zusammenhang die automatische Weiterverarbeitung der FAX-Information in der empfangenden Datenverarbeitungsanlage bekannt, wie ein Beispiel (Deutsche Patentanmeldung P 9538 mit dem Titel "Verfahren zur Verteilung von Fax-Dokumenten über ein EDV-System") zeigt.

Daneben existieren bereits verschiedene Verfahren, die eine Umsetzung der FAX-Modulation in eine Datenmodulation ermöglichen. Bei einem Verfahren nach U.S. Patent 5,513,212 erfolgt diese Umsetzung ausschließlich nur zu dem Zwecke der gleichzeitigen Übertragung von FAX- und Sprachmodulation mittels sogenannter SVD-Modulation. Eine Anregung zu einer digitalen Übertragung der Daten mit dem Ziel einer Bandbreitenreduktion fehlt in dieser Veröffentlichung völlig.

Ein anderes Verfahren, das in einer Studie "Requirements for Internet Fax" von Larray Masinter von der Xerox Corp. in "Application Area INTERNET-DRAFT", vom Nov 4, 1997, Seiten 1 bis 4, beschrieben ist, verwendet ein digitales Netz, um die ursprünglich analog modulierte Information in digitaler Form zwischen zwei umsetzenden Modems zu übertragen, die funktionell direkt am Übergang in das Datennetz angeordnet sein müssen.

Alle dies bekannten Verfahren leiden unter dem gravierenden Nachteil, daß sie sich nur auf den Übergang zwischen verschiedenen Diensten und die Umsetzung einzelner Dienste beschränken, die über eine Sprachverbindung im Sprachverbindungsweg abgewickelt werden.

Die WO 97/47107 offenbart ein Verfahren und eine Vorrichtung zum Anschalten eines Faxgerätes an ein digitales Kommunikationsnetz. Um eine Faxnachricht von einem Faxgerät zu einem anderen Faxgerät unter Verwendung einer digitalen Kommunikation übertragen zu können, ist jedem Faxgerät eine Schnittstelle zugeordnet, die die zu übertragende Faxnachricht in eine Bilddatendatei umsetzt. Die Bilddatendatei wird anschließend über eine Analogleitung oder eine ISDN-Leitung eines öffentlichen, leitungsvermittelnden Netzes oder eine private Telefonleitung zu einem Server übertragen. Im Server wird die Bilddatendatei in eine Datendatei eingebettet und einem Datenweg eines Datennetzes zugeführt.

Die Aufgabe der vorliegenden Erfindung besteht somit darin, eine Lösung für die Beseitigung der oben ausführlich diskutierten Probleme hinsichtlich der Übertragungsbandbreite bekannter Verfahren anzugeben, die für eine Reduktion der für die Übertragung von Nutzinformation benutzten Übertragungswege keinen Beitrag liefern.

Gelöst wird das Problem der Bandbreitenreduktion bei der Übertagung von Daten über Sprachverbindungswege, die in einem digitalen Datennetz geführt werden durch die Erfindung dadurch, daß sowohl das sendende als auch das empfangende Endgerät ein im allgemeinen gleichartiges Verfahren für die Datenübertragung in Sprachverbindungswegen benutzt, aber der Transport der zu übertragenden Nutzinformation in einem oder mehreren Abschnitten über ein Datennetz erfolgt, wobei das durch das Endgerät vorgegebene Modulationsverfahren nicht auf der gesamten Übertragungsstrecke in direkter Weise über einen oder mehrere Vermittlungsknoten oder in indirekter Weise über ein Datennetz verwendet wird, sondern eine Umsetzung der Codierung der Nutzinformationen zwischen der Datenübertragung im digital übertragenden Sprachverbindungsweg und der Datenübertragung erst innerhalb des Datennetzes (4) erfolgt, so dass auf Abschnitten des Datennetzes (4) die Nutzinformationen über den codierten Sprachverbindungsweg und auf den anderen Abschnitten des Datennetzes (4) die Nutzinformationen mittels eines für digitale Datennetze geeigneten Verfahrens übertragen werden, wobei ferner eine funktionale Anpassung der Endgeräte und deren Anpassung an die Übertragungseigenschaften des digitalen Datennetzes bei der Übertragung der Nutzinformation entbehrlich sind.

Gemäß einer weiteren Ausgestaltung des erfindungsgemäßen Verfahrens erfolgt die Einbeziehung eines digitalen Datennetzes in den zur Datenübertragung genutzten Sprachverbindungsweg automatisch durch eine kontextbezogene Rufnummerumwertung während des Verbindungsaufbaus, wobei die den Sprachverbindungsweg benutzenden Endgeräte diese nicht wahrnehmen.

Ferner erfolgt die Einbeziehung des digitalen Datennetzes in den zur Sprachübertragung genutzten Sprachverbindungsweg derart, daß die Ende-zu-Ende-Signalisierung der Endgeräte, die für die Steuerung des Datentransportes benötigt wird, am Übergang in das zur Übertragung benutzte digitale Datennetz terminiert und neu generiert wird, um so die Steuerung des Datentransportes durch das digitale Datennetz in diese Ende-zu-Ende-Signalisierung zu integrieren.

Außerdem erfolgt eine geegnete Zwischenspeicherung und Umsetzung der übertragenen Daten- und Signalisierungsinformation, so daß unterschiedliche Verfahren der an der Datenübertragung beteiligten Endgeräte verwendbar sind.

Eine weitere Ausgestaltung sieht vor, daß die Nutzinformation für ihre Übertragung über das digitale Datennetz in kleine Datenpakete aufgeteilt und so flexibel an die durch das Endgerät tatsächlich übertragene Bitrate angepaßt wird.

Es wird durch die Erfindung weiter vorgeschlagen, daß mindestens eines der Endgeräte direkt oder über eine digitale Übertragungsstrecke an das digitale Datennetz angeschlossen ist, so daß vermieden wird, daß die Daten vom Endgerät nicht für eine Übertragung im Sprachverbindungsweg erst codiert und dann wieder decodiert werden müssen.

Das Verfahren nach der Erfindung wird in einem Datennetz realisiert, das ein allgemein zugängliches Datennetz ist oder aus einem Verbund mehrerer allgemein zugänglicher Datennetze besteht.

Es ist weiterhin vorgesehen, daß die zu übertragende Nutzinformation den Merkmalen der FAX-Klasse 3 entspricht.

Schließlich ist eine Weiterbildung des erfindungsgemäßen Verfahrens dadurch gekennzeichnet, daß die Nutzinformation im digitalen Datennetz mittels krytografischer Verfahren gegen Mitlesen, Verändern und/oder Vortäuschen falscher Verbindungsdaten und/oder Inhalte geschützt wird.

Durch das oben angegebene Verfahren und dessen Weiterbildungen ist es möglich, was bei den bisher bekannten Verfahren nicht möglich ist, nämlich die für die Umsetzung notwendigen Geräte an zentralen Stellen des Datennetzes anzuordnen und somit nicht an jedem Übergang von einem herkömmlichen Sprachverbindungsweg und einem digitalen Datennetz eine solche Umsetung vorsehen zu müssen.

Es ist somit von großem Vorteil, daß nach dem durch die Erfindung gelösten Problem einer Bandbreitenreduktion nun für die Weitverkehrsübertragung der Nutzinformation nur die Bandbreite benötigt wird, die das Endgerät tatsächlich für die Informationsübertragung benötigt. Bei einer FAX-Gruppe 3 Verbindung mit derzeit üblichen 14400 bit/s werden also tatsächlich nur geringfügig mehr als 14400 bit/s zur Übertragung, anstelle der üblichen 64 kbit/s (z.B. im ISDN D-Kanal), für die Codierung im Sprachkanal benötigt. Dieses entspricht ungefähr einer Verringerung der benötigten Bandbreite auf 1/4 der ursprünglichen Kapazität. Die digitale Übertragung der Nutzinformation über ein beliebiges Datennetz läßt sich dabei so in die Verbindung integrieren, daß es für die beteiligten Endgeräte nicht möglich ist zu erkennen, ob die Übertragung vollständig über einen Sparchverbindungsweg, oder ob die Übertragung teilweise über ein eigenständiges Datennetz erfolgt. Damit ist auch gewährleistet, daß, wie bei FAX-Diensten allgemein üblich, die erfolgreiche Beendigung der Verbindung quittiert wird.

Es ist zwar bei der EDV-unterstützten Vermittlung von FAX-Information auch die Verwendung von Datennetzen für die verzögerte Weiterleitung der Nutzinformation bekannt, jedoch stellt dort die FAX-Vermittlung einen Endpunkt für die quittierte FAX-Übertragung dar und dient nicht der transparenten Übertragung der FAX-Information. Damit ist, im Gegensatz zur Erfindung, keine echte Ende-zu-Ende-Quittierung der erfolgten Übertragung der FAX-Information möglich.

Ein weiterer Vorteil der Erfindung ist darin zu sehen, daß, im Gegensatz zu der bereits bekannten Nutzung von Datennetzen zur Echtzeitübertragung von FAX-Informationen, sich das beanspruchte Verfahren deutlich kostengünstiger realisieren läßt. So kann bei diesem die Umsetzung von Datenmodulation im Sprachverbindungsweg auf Datenübertagung im Datennetz an einer zentralisierten Stelle des Datennetzes vorgenommen werden. Damit kann, je nach Randbedingung, für jede Verbindung individuell entschieden werden, ob für ein oder mehrere Abschnitte die Datenübertragung im Sprachverbindungsweg umgesetzt werden soll oder nicht. Bei Verbindungen, die nur Übertragungsstrecken mit genügend großen Übertragungsreserven verwenden, könnte die Datenübertragung im über ein Datennetz geführten Sprachverbindungsweg ohne zusätzliche Umsetzung die kostengünstigere Lösung sein. Wenn jedoch längere Strecken auf stark ausgelasteten Übertragungsstrecken des Datennetzes geführt werden müssen, so kann die durch das erfindungsgemäße Verfahren durchgeführte Umsetzung der Datenübertragung die Datenrate auf den stark beanspruchten Strecken signifikant reduzieren.

Im folgenden wird die Erfindung anhand eines durch Zeichnungen erläuterten Ausführungsbeispiels näher beschrieben. In diesem Zusammenhang zeigen:
- Fig. 1: eine schematische Darstellung des bekannten prinzipiellen Aufbaus einer Datenübertragung in Sprachverbindungswegen,
- Fig. 2: eine schematische Darstellung eines bekannten Verfahrens für eine dienstspezifische Nutzung eines Datennetzes,
- Fig. 3: eine schematische Darstellung des erfindungsgemäßen Verfahrens,
- Fig. 4: eine vereinfachte Darstellung der Informationsübertragung und
- Fig. 5: eine vereinfachte Darstellung eines Beispiels eines Netzes, das nach dem erfindungsgemäßen Verfahren realisiert ist.

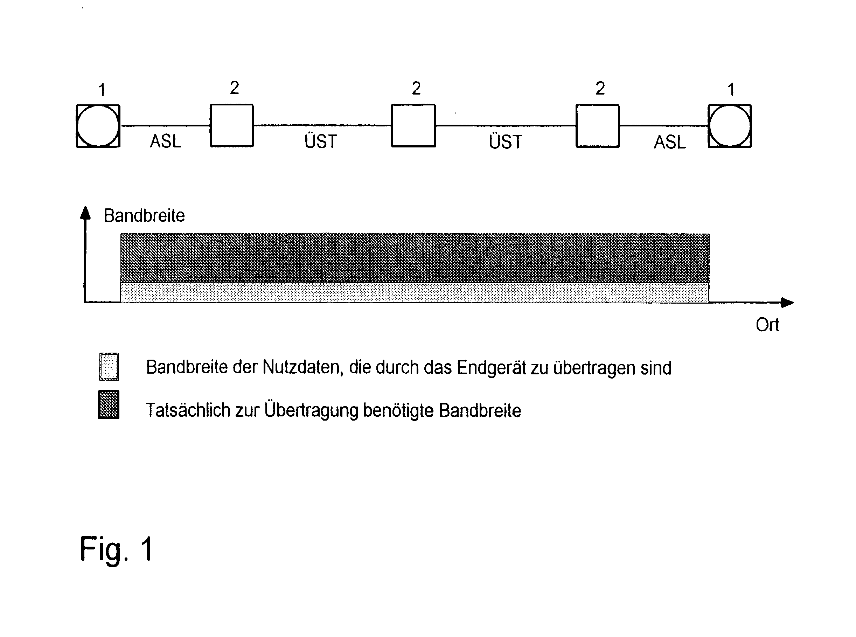

Fig. 1 zeigt den prinzipiellen Aufbau einer Datenübertragung in Sprachverbindungswegen. Die beiden Endgeräte 1 sind über eine Anschlußleitung ASL mit einer Vermittlungsstelle 2 verbunden. Diese Vermittlungsstellen sind untereinander über Sprachverbindungswege ÜST verbunden. Zum Zwecke des Verbindungsaufbaus sendet im allgemeinen eines der beiden Endgeräte 1 seine Zielinformation an die zugehörigen Vermittlungsstelle 2, die daraufhin einen Sprachverbindungsweg UST zwischen den beiden Endgeräten 1 aufbaut. Auf Grund ihrer technischen Bauart sind beide Endgeräte 1 in der Lage, die zu übertragenden Daten so zu codieren, daß sie über einen Sprachverbindungsweg übertragen werden können. Solche Codierungen basieren meist auf Mehrfrequenz-Tonsignalen, wie sie beispielsweise auch von der Mehrfrequenztonwahl bekannt sind.

In der Regel testen die beiden Endgeräte 1 zu Anfang der Verbindung die Charakteristik des Sprachverbindungsweges ÜST und des eigenen Gerätetyps, um sich dann interaktiv auf ein Übertragungsverfahren zu verständigen, das den Sprachverbindungsweg optimal ausnutzt. Nahezu unerheblich ist bei der Festlegung des Übertragungsverfahrens aber, wie die einzelnen an der Verbindung beteiligten Übertragungsstrecken ASL,ÜST und Vermittlungsstellen 2 technisch tatsächlich realisiert sind, ob also die Übertragung und die Vermittlung beispielsweise in einem bestimmten Abschnitt analog oder digital erfolgt.

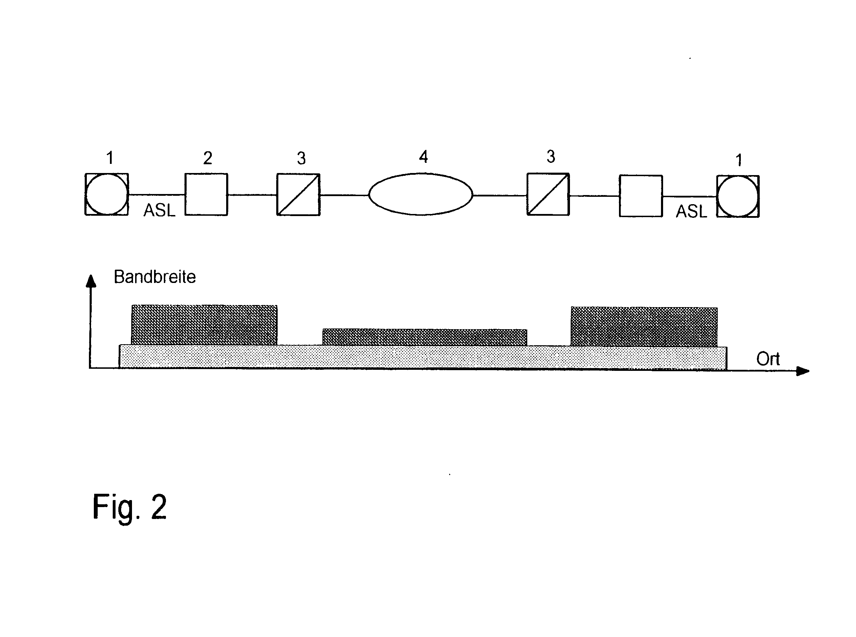

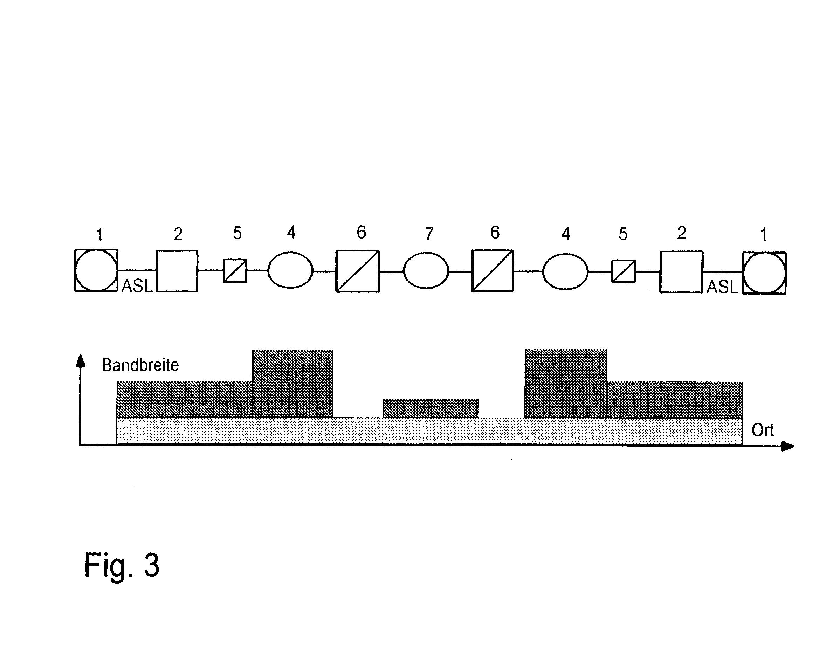

Zur Veranschaulichung der in den einzelnen Abschnitten ASl,ÜST der Übertragungsstrecke benötigten Übertragungsbandbreite ist unterhalb der Ende-zu-Ende-Verbindung im unteren Teil der Figur 1, ebenso, wie in den Figuren 2 und 3, jeweils die tatsächlich benötigte Übertragungsbandbreite dargestellt, wobei im Beispiel der Figur 1 ein ausschließlich digitales Übertragungsverfahren und eine digitale Vermittlung für den Sprachverbindungsweg angenommen wurde.

In Figur 2 ist ein bekanntes Übertragungsverfahren für FAX-Informationen dargestellt. Wie bereits im Zusammenhang mit Figur 1 beschrieben, sendet das Endgerät 1 Daten über einen über seine Anschlußleitung ASL und die zugeordnete Vermittlungsstelle 2 bereitgestellten Sprachverbindungsweg.

Anders als beim durchgehenden Sprachverbindungsweg nach Figur 1 wird für die Übertragung der Nutzinformation ein Datennetz 4 verwendet. Am Übergang 3 in das Datennetz 4 wird der Sprachverbindungsweg terminiert, und die darin übertragenen Daten werden direkt über das Datennetz 4 an den zugehörigen Übergang 3 geleitet, ab dem die Datenübertragung dann wieder über einen Sprachverbindungsweg erfolgt.

In diesem Zusammenhang ist jedoch zu erwähnen, daß innerhalb des Datennetzes 4 die für Informationsübertragungen benötigte Bandbreite nur geringfügig über der durch das Endgerät gesendeten Nutzinformation liegt, wie auch der untere Teil der Figur 2 erkennen läßt. Hervorzuheben ist allerdings auch, daß in diesem Beispiel der Sprachverbindungsweg nicht über das Datennetz 4 geleitet sondern am Übergang 3 terminiert und neu generiert wird, so daß in keinem der hier verwendeten Abschnitte des Übertragungsweges eine Übertragung des Sprachverbindungsweges über ein digitales Datennetz erfolgt, wie es aber für das im folgenden beschriebene erfindungsgemäße Verfahren eine zwingende Voraussetzung ist, denn es geht da ja darum Übertragungsbandbreite bei der Übertragung über ein digitales Datennetz einzusparen.

Besonders vorteilhaft kann das erfindungsgemäße Verfahren (vgl. Anspruch 2) realisiert werden, wenn für den Übergang vom Sprachverbindungsweg in das Datennetz nicht spezielle, an die Art der Sprachübertragung angepaßte, Modems sondern die normalen Telefon-Gateways für den Sprachverkehr verwendet werden.

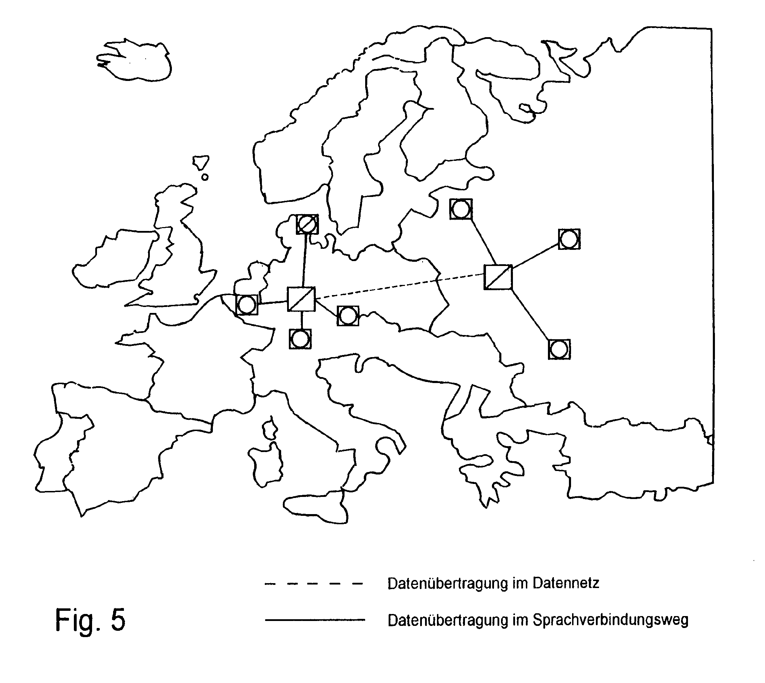

Der eigentliche Übergang von einer Datenübertragung im Sprachverbindingsweg zu einer Übertragung im digitalen Datennetz kann vorteilhafterweise an einigen zentralen Standorten im Datennetz vergenommen werden, wie Figur 5 in groben Zügen zeigt. Damit könnten auch der Übergang zwischen der Übertragung im digital geführten Sprachverbindungsweg und der Datentransport im Datennetz flexibel realisiert werden, und für die Anbindung der Sprachverbindungswege an das Datennetz könnten bereits vorhandene Geräte verwendet werden, die nicht entsprechend dem erfindungsgemäßen Verfahren modifiziert sein müßten.

Das Verfahren nach der Erfindung geht am besten aus Fig. 3 hervor. Ein Sprachverbindungsweg beginnt an einem Endgerät 1 und wird, wie auch bei den beiden vorher beschriebenen Verfahren, über eine Anschlußleitung ASL und eine oder (nicht dargestellt) mehrere Vermittlungsstellen 2 weitergeführt. Im Gegensatz zu dem in Fig. 2 dargestellten bekannten Verfahren wird der Sprachverbindungsweg an einem Übergang 5 in ein Datennetz 4 nun nicht terminiert, sondern der vollständige Sprachverbindungsweg, einschließlich der darin modulierten Nutzinformation in dem Datennetz 4 geführt. Der im Vergleich zum reinen Sprachverbindungsweg ein wenig größere Banbreitenbedarf ergibt sich durch eine zusätzliche Steuerinformation, die in einem Datennetz immer benötigt wird. Innerhalb dieser Führung des Sprachverbindungsweges im Datennetz ist das erfindungsgemäße Verfahren einsetzbar, und es kann die im Sprachverbindungsweg modulierte Nutzinformation am Übergang 6 zwischen dem Ende eines Datennetzes 4 und dem Anfang des nächsten, für eine Übertragung verwendeten Datennetzes 7 umgesetzt und direkt über das genannte nächste Datennetz 7 übertagen werden.

Das erfindungsgemäße Verfahren läßt sich gemäß einer weiteren Ausgestaltung dann besonders einfach in ein bestehendes Datennetz integrieren, wenn die Einbeziehung des Datennetzes in den zur Datenübertragung genutzen Sprachverbindungsweg, sowie die Einbeziehung von Übertragungsabschnitten, die nach dem erfindungsgemäßen Verfahren betrieben werden, automatisch durch eine kontextbezogene Rufnummerumwertung erfolgt.

Die Rufnummerumwertung ist möglich, wenn entweder das die Verbindung aufbauende Endgrät eine Kennzeichnung für den gewünschten Dienst, z. B. FAX, mitsendet oder wenn sie in der dem Endgerät zugeordneten Vermittlungsstelle abgespeichert ist, über welche Anschlußleitung ausschließlich Datenübertragung im Sprachverbindungsweg stattfinden wird. In diesem Fall muß während des Verbindungsaufbaus keine besondere Rufnummer gewählt werden, damit die Datenübertagung im Sprachverbindungsweg durch die Datenübertragung im Datennetz ersetzt wird. Dieser Vorgang findet automatisch durch die besagte Rufnummerumwertung im Fernmeldenetz statt.

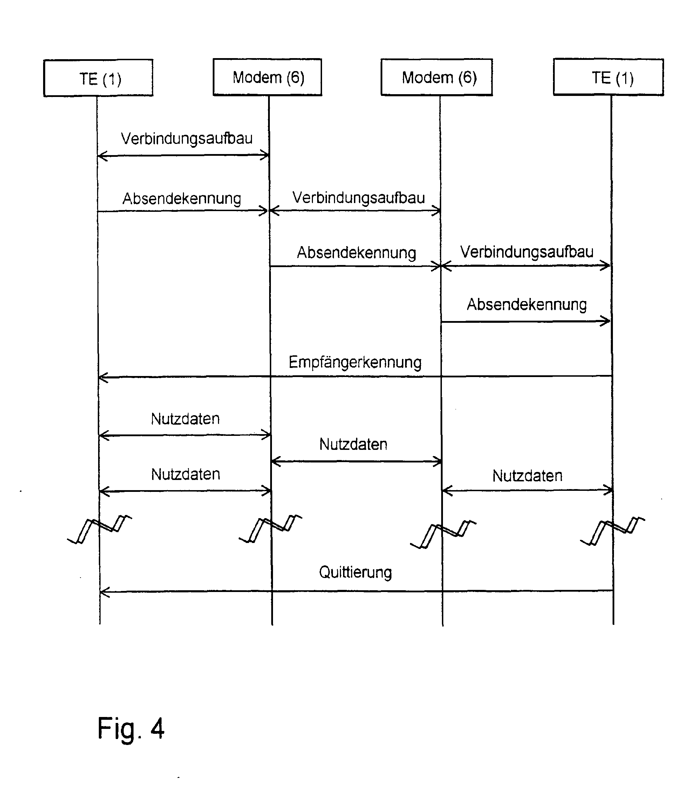

Ein anderes Problem betrifft die Quittierung der übertragenen Daten, das durch eine weitere Ausgestaltung der Erfindung (vgl. Anspruch 4) gelöst wird. Bei der Datenübertragung über einen Sprachverbindungsweg kann nämlich prinzipbedingt nur eine Ende-zu-Ende-Quittierung der übertragenen Daten erfolgen. Dieses hat den Nachteil zur Folge, daß im Falle einer fehlerhaften Übertragung der Daten, die Übertragung über die gesamte Übertragungsstrecke wiederholt werden muß. Durch das abschnittweise Übertagen und Quittieren der Daten muß nur auf dem Abschnitt die Übertragung wiederholt werden, auf dem der Fehler tatsächlich aufgetreten ist. Figur 4 zeigt ein Beispiel einer möglichen praktischen Realisierung, durch welche die Netto-Datenübertragungsrate ebenfalls verbessert wird.

Nach erfolgtem Aufbau des Sprachverbindungsweges zwischen Endgrät 1 und dem über einen Modem vorgenommenen Übergang 5 von einer Daten-(Nutzinformations-) Übertragung im Sprachverbindungsweg und einer Datenübertragung im digitalen Datennetz wird die Absendekennung des Endgerätes 1 übertragen. Hierzu ist es nicht notwendig, daß die Verbindung zum anderen Endgrät 1 schon vollständig aufgebaut ist. Sobald nämlich die Verbindungsabschnitte zum empfangenden Endgerät aufgebaut sind, wird die Absendekennung über diese Abschnitte der Übertragungsstrecke übertragen. Entsprechend wird dann, wie Figur 4 zeigt, die Empfängerkennung in Rückwärtsrichtung an das sendende Endgerät Übertragen. Anschließend wird die Nutzinformation abschnittsweise übertragen und quittiert. Die abschließende Bestätigung der erolgten Übertagung wird dann wieder direkt vom empfangenden Gerät an das sendende Endgerät übermittelt.

Da die technischen Parameter der beiden Endgeräte nicht zwangsweise gleich sind oder gleich sein müssen, ist es naheliegend, daß auf den jeweiligen Sprachverbindungswegen unterschiedliche technische Verfahren verwendet werden. So ist also möglich, daß die beiden Endgeräte mit unterschiedlichen Bitraten senden und empfangen. Gemäß der Erfindung (vgl. Anspruch 5) werden zur Lösung dieses Problems an den Übergängen 6 zwischen Datenübertragung im Sprachverbindungsweg 4 und Datenübertragung im digitalen Datennetz 7 die Nuztdaten zur Geschwindigkeitsanpassung kurzzeitig (abhängig vom zu kompensierenden Geschwindigkeitsunterschied) zwischengespeichert und es werden gegebenenfalls durch entsprechende Signalisierung zeitliche Lücken im Datenstrom aufgefangen.

Da bei der Datenübertragung im Sprachverbindungsweg nicht immer die maximal mögliche Übertragungsrate während der gesamten Dauer der Verbindung benötigt wird, wird gemäß einer weiteren Ausgestaltung der Erfindung (vgl. Anspruch 6) die Datenübertragung im digitalen Datennetz 7 vorteilhafterweise nicht mit konstanter Bitrate vorgenommen, sondern flexibel an den momentanen Bedarf angepaßt.

Bei einer Anwendung des erfindungsgemäßen Verfahrens der Bandbreitenreduktion in Sprachverbindungswegen auf die Übertagung von Nutzinformation entsprechend der FAX Klasse 3 (vgl. Anspruch 9) wird besondere Effizienz erzielt, wenn das Versenden von FAX-Nachrichten über große Entfernungen erfolgt. Durch die Anordnung von Übergängen von FAX-Übertragung im Sprachverbindungsweg auf FAX-Übertragung in einem weltweit verfügbaren Datennetz, wie beispielsweise das Internet oder ein X.25 Netz, ist es möglich, die FAX-Nachricht auf den teuren Weitverkehrstrecken mit entsprechend geringerer Bitrate über ein Datennetz zu übertragen, während die räumliche Verteilung der Nachricht von den Übergängen bis zum Endbenutzer über normale Sprachverbindungswege erfolgt, die sowohl in herkömmlicher Technik, wie auch mit Hilfe digitaler Datennetze realisiert sein können. Hierbei wäre es beispielsweise ausreichend, wenn jeweils einer dieser Übergänge in Moskau, Frankfurt, (wie Fig. 5 zeigt), New York und Tokio, installiert sein würde. Für einen Großteil des internationalen FAX-Verkehrs wäre es dann nicht mehr notwendig, die Datenübertragung im Sprachverbindungsweg auf interkontinentalen Verbindungen durchzuführen.

Anstelle des Aufbaus eines neuen weltweiten Datennetzes zum Zwecke der Bandbreitenreduktion bei der Datenübertragung im Sprachverbindungsweg ist es möglich (vgl. Anspruch 8), das bestehende Internet für diesen Zweck zu nutzen.

Der untere Teil von Fig. 3 zeigt eindrucksvoll, wie auf den teuren Weitverbindungsstrecken, die mittels digitaler Datennetze 7 realisiert sind, Bandbreite eingespart wird.

Da im Internet aber nicht gewährleistet werden kann, daß kein unerlaubter Zugriff auf die dort übertragenen Daten erfolgt, ist eine Verschlüsselung mittels kryptografischer Verfahren empfehlenswert (vgl. Anspruch 10). Für den Fall, daß ein Computer oder ein intelligentes Terminal als Endgerät verwendet werden soll, ist es mit der entsprechenden Software möglich, den Computer oder das inelligente Terminal direkt an das digitale Datennetz anzuschließen (vgl. Anspruch 7) Auf diese Weise ist es zum Beispiel möglich, mit jedem Personal Computer (PC), der an das Internet angeschlossen ist, eine FAX-Nachricht an ein Gruppe 3 Endgerät zu versenden, ohne daß eine Anpassung der beteiligten Hardware notwendig wäre.

## Patentansprüche

1. Verfahren zur Bandbreitenreduktion bei der Übertragung von Daten über Sprachverbindungswege,
wobei sowohl sendendes als auch empfangendes Endgerät (1) ein im allgemeinen gleichartiges Modulationsverfahren für die Datenübertragung in Sprachverbindungswegen benutzen,
aber der Transport der zu übertragenden Nutzinformation in einem oder mehreren Abschnitten über ein Datennetz (4,7) erfolgt, wobei das durch das Endgerät (1) vorgegebene Modulationsverfahren nicht auf der gesamten
Übertragungsstrecke in direkter Weise über einen oder mehrere Vermittlungsknoten (2) oder in indirekter Weise über ein Datennetz (4) verwendet wird,
wobei ferner eine funktionale Anpassung der Endgeräte (1) und deren Anpassung an die Übertragungseigenschaften des digitalen Datennetzes bei der Übertragung der Nutzinformation entbehrlich sind, **dadurch gekennezichent, dass**
die Sprachverbindungswege zumindest abschnittsweise in einem digitalen Datennetz (4) geführt werden, wobei eine Umsetzung der Codierung der Nutzinformationen zwischen der Datenübertragung im digital übertragenden Sprachverbindungsweg und der Datenübertragung im Datennetz (4) erst innerhalb des Datennetzes (4) erfolgt, so dass auf Abschnitten des Datennetzes (4) die Nutzinformationen über den codierten Sprachverbindungsweg und auf den anderen Abschnitten des Datennetzes (4) die Nutzinformationen mittels eines für digitale Datennetze geeigneten Verfahrens übertragen werden.

2. Verfahren nach Anspruch 1,
**dadurch gekennzeichnet, daß** die Einbeziehung eines digitalen Datennetzes (7) in den zur Datenübertragung genutzten Sprachverbindungsweg automatisch durch eine Rufnummerumwertung während des Verbindungsaufbaus vorgenommen wird, wobei die den Sprachverbindungsweg nutzenden Endgeräte (1) diese nicht wahrnehmen, wobei die Rufnummernumwertung entweder in Abhängigkeit einer von dem die Verbindung aufbauenden Endgerät mitgesendeten Kennzeichnung für den gewünschten Dienst oder in Abhängigkeit von in der dem Endgerät zugeordneten Vermittlungsstelle gespeicherten Information, über welche Anschlußleitung ausschließlich Datenübertragung im Sprachverbindungsweg stattfinden wird, erfolgt.

3. Verfahren nach Anspruch 2,
**dadurch gekennzeichnet, daß** die Einbeziehung des digitalen Datennetzes (7) in den zur Datenübertragung genutzten Sprachverbindungsweg derart vorgenommen wird, daß die Ende-zu-Ende-Signalisierung der Endgeräte (1), die für die Steuerung des Datentransportes benötigt wird, am Übergang (6) in das zur Übertragung genutzte digitale Datennetz (7) terminiert und neu generiert wird, um so die Steuerung des Datentransportes durch das digitale Netz in diese Ende-zu-Ende-Signalisierung zu integrieren.

4. Verfahren nach einem oder mehreren der Ansprüche 1 bis 3, **dadurch gekennzeichnet, daß** zur Anpassung unterschiedlicher Verfahren, welche die Endgeräte (1) zur Datenübertragung verwenden, eine geeignete Zwischenspeicherung und Umsetzung der übertragenen Daten- und Signalisierungsinformation vorgenommen wird, wobei die an der Datenübertragung beteiligten Endgeräte (1) die Benuzung unterschiedlicher Übertragungsverfahren nicht feststellen.

5. Verfahren nach einem oder mehreren der Ansprüchen 1 bis 4, **dadurch gekennzeichnet, daß** die Nutzinformation für ihre Übertragung über das digitale Datennetz (7) in einzelne Datenpakete aufgeteilt wird, wobei die Übertragungsrate der Pakete an den Netzübergängen (6) flexibel an die durch das Endgerät (1) tatsächlich übertragende Bitrate angepaßt wird.

6. Verfahren nach einem oder mehreren der Ansprüche 1 bis 5, **dadurch gekennzeichnet, daß** mindestens eines der Endgeräte (1) direkt oder über eine digitale Übertragungsstrecke an das digitale Datennetz angeschlossen ist, so daß die Daten vom Endgerät (1) für ihre Übertragung im Sprachverbindungsweg nicht zuerst codiert und dann wieder decodiert werden müssen.

7. Verfahren nach einem oder mehreren der Ansprüche 1 bis 6, **dadurch gekennzeichnet, daß** seine Realisierung in einem Datennetz vorgenommen wird, das ein allgemein zugängliches Datennetz ist oder aus einem Verbund mehrerer allgemein zugänglicher Datennetze besteht.

8. Verfahren nach einem oder mehreren der Ansprüche 1 bis 7, **dadurch gekennzeichnet, daß** die zu übertragende Nutzinformation den Merkmalen der FAX-Klasse 3 entspricht.

9. Verfahren nach einem oder mehreren der Ansprüche 1 bis 8, **dadurch gekennzeichnet, daß** die Nutzinformation vor ihrer Übertragung in digitalen Datennetzen (7) mittels kryptografischer Verfahren gegen Mitlesen, Verändern und/oder Vortäuschen falscher Verbindungsdaten und/oder Inhalte geschützt wird.

## Claims

1. Method for bandwidth reduction in the transmission of data over voice communication paths, wherein both the transmitting and receiving terminals (1) use a modulation method that is generally of the same type for the data transmission over voice communication paths, but the transport of the payload data to be transmitted takes place in one or more segments through a data network (4, 7), wherein the modulation method specified by the terminal (1) is not used over the entire communication path in a direct manner through one or more switching nodes (2) or in an indirect manner through a data network (4), wherein, furthermore, a functional adaptation of the terminals (1) and their adaptation to the transmission characteristics of the digital data network can be dispensed with in the transmission of the payload data, **characterized in that** the voice communication paths are carried on a digital data network (4) at least in sections, wherein a conversion of the coding of the payload information between the data transmission in the digitally carried voice communication path and the data transmission in the data network (4) first takes place within the data network (4), so that in sections of the data network (4) the payload data is transmitted over the coded voice communication path, and in the other sections of the data network (4) the payload data is transmitted by means of a method suitable for digital data networks.

2. Method according to claim 1, **characterized in that** the incorporation of a digital data network (7) in the voice communication path used for the data transmission is automatically performed during connection setup by means of call number conversion, wherein the terminals (1) using the voice communication path do not perceive this, wherein the call number conversion takes place either as a function of an identification for the desired service additionally transmitted by the terminal setting up the connection, or as a function of information stored in the exchange associated with the terminal concerning which subscriber line will be exclusively used for data transmission over voice communication paths.

3. Method according to claim 2, **characterized in that** the incorporation of the digital data network (7) in the voice communication path used for the data transmission is performed in such a way that the end-to-end signaling of the terminals (1) that is required for controlling the data transport terminates at the interface (6) into the digital data network (7) used for transmission and is regenerated in order to integrate the control of the data transport through the digital network into this end-to-end signaling.

4. Method according to one or more of claims 1 through 3, **characterized in that** a suitable buffering and conversion of the transmitted data and signaling information is performed to adapt different methods that the terminals (1) use for data transmission, wherein the terminals (1) participating in the data transmission do not detect the use of different transmission methods.

5. Method according to one or more of claims 1 through 4, **characterized in that** the payload information is divided into individual data packets for transmission through the digital data network (7), wherein the transmission rate of the packets is flexibly adapted at the network interfaces (6) to the bit rate actually transmitted by the terminal (1).

6. Method according to one or more of claims 1 through 5, **characterized in that** at least one of the terminals (1) is connected to the digital data network directly or through a digital transmission path, so that the data from the terminal (1) do not need to first be coded for their transmission in the voice communication path and then be decoded again.

7. Method according to one or more of claims 1 through 6, **characterized in that** it is implemented in a data network that is a generally accessible data network or consists of a combination of multiple generally accessible networks.

8. Method according to one or more of claims 1 through 7, **characterized in that** the payload information to be transmitted corresponds to the features of fax class 3.

9. Method according to one or more of claims 1 through 8, **characterized in that** the payload information is protected against interception, alteration and/or spoofing of false connection data and/or content by cryptographic methods prior to its transmission in digital data networks (7).

## Revendications

1. Procédé de réduction de la largeur de bande lors de la transmission de données par l'intermédiaire de voies de communication vocale,
dans lequel les terminaux (1) tant émetteur et que récepteur utilisent un procédé de modulation généralement similaire pour la transmission de données par l'intermédiaire de voies de communication vocale, mais dans lequel le transport de l'information utile à transmettre se fait dans un ou plusieurs tronçons par l'intermédiaire d'un réseau de données (4, 7), le procédé de modulation imposé par le terminal (1) n'étant pas utilisé sur toute la voie de transmission de manière directe par l'intermédiaire d'un ou plusieurs noeuds de commutation (2) ou de manière indirecte par l'intermédiaire d'un réseau de données (4),
le procédé supprimant par ailleurs la nécessité d'une adaptation fonctionnelle des terminaux (1) et de l'adaptation de ceux-ci aux caractéristiques de transmission du réseau de données numérique lors de la transmission de l'information utile, **caractérisé en ce que**
les voies de communication vocale passent dans un réseau de données numérique (4) au moins par tronçons, une conversion du codage des informations utiles entre la transmission de données sur la voie de communication vocale à transmission numérique et la transmission dans le réseau de données (4) n'intervenant qu'au sein du réseau de données (4) de manière que, sur des tronçons du réseau de données (4), les informations utiles sont transmises par l'intermédiaire de la voie de communication vocale codée, et sur les autres tronçons du réseau de données (4), les informations utiles sont transmises au moyen d'un procédé adapté aux réseaux de données numériques.

2. Procédé selon la revendication 1,
**caractérisé en ce que** l'intégration d'un réseau de données numérique (7) dans la voie de communication vocale utilisée pour la transmission de données s'effectue automatiquement par traduction du numéro d'appel pendant l'établissement de la liaison, ladite traduction n'étant pas décelée par les terminaux (1) utilisant la voie de communication vocale, la traduction des numéros d'appel s'effectuant soit en fonction d'un identifiant envoyé par le terminal établissant la liaison pour le service souhaité soit en fonction de l'information stockée dans le commutateur associé au terminal et indiquant la connexion par l'intermédiaire de laquelle la transmission de données se fera exclusivement par voie de communication vocale.

3. Procédé selon la revendication 2,
**caractérisé en ce que** l'intégration du réseau de données numérique (7) dans la voie de communication vocale utilisée pour la transmission de données est réalisée de manière à terminer et générer à nouveau, au niveau de la passerelle (6) vers le réseau de données numérique (7) utilisé pour la transmission, la signalisation point-à-point des terminaux (1), nécessaire à la commande du transport de données, afin d'intégrer la commande du transport de données par le réseau numérique dans cette signalisation point-à-point.

4. Procédé selon l'une ou plusieurs des revendications 1 à 3, **caractérisé en ce que**, pour adapter des procédés différents utilisés par les terminaux (1) pour la transmission de données, on effectue un stockage intermédiaire approprié et une conversion de l'information de données et de signalisation transmise, les terminaux (1) participant à la transmission de données ne décelant pas que des procédés de transmission différents sont utilisés.

5. Procédé selon l'une ou plusieurs des revendications 1 à 4, **caractérisé en ce que**, pour sa transmission par l'intermédiaire du réseau de données numérique (7), l'information utile est divisée en paquets de données individuels le débit de transmission des paquets étant adapté de manière souple, au niveau des passerelles (6), au débit binaire de transmission effectif du terminal (1).

6. Procédé selon l'une ou plusieurs des revendications 1 à 5, **caractérisé en ce que** au moins un des terminaux (1) est connecté au réseau de données numérique directement ou par l'intermédiaire d'une voie de transmission numérique, de manière que les données du terminal (1) n'aient pas besoin d'être codées dans un premier temps puis décodées pour être transmises dans la voie de communication vocale.

7. Procédé selon l'une ou plusieurs des revendications 1 à 6, **caractérisé en ce qu'**il est mis en oeuvre dans un réseau de données qui est un réseau de données communément accessible ou un réseau constitué d'une interconnexion de plusieurs réseaux de données communément accessibles.

8. Procédé selon l'une ou plusieurs des revendications 1 à 7, **caractérisé en ce que** l'information utile à transmettre correspond aux caractéristiques de la classe de FAX 3.

9. Procédé selon l'une ou plusieurs des revendications 1 à 8, **caractérisé en ce que**, avant d'être transmise dans des réseaux de données numériques (7), l'information utile est protégée moyennant des procédés cryptographiques contre le piratage, la modification et/ou la simulation de fausses données de connexion et/ou de faux contenus.
